# EUROPÄISCHE PATENTSCHRIFT

(11) **EP 4 396 482 B1**
(45) Veröffentlichungstag und Bekanntmachung des Hinweises auf die Patenterteilung: **15.10.2025**
(21) Anmeldenummer: 22769254.8
(22) Anmeldetag: 26.08.2022
(51) Int. Cl.: F16K 41/02, F16K 37/00

(54) **STELLVENTILEINHEIT MIT EINER MESSEINRICHTUNG**
CONTROL VALVE UNIT HAVING A MEASURING DEVICE
UNITÉ DE SOUPAPE DE COMMANDE COMPRENANT UN DISPOSITIF DE MESURE

(30) Priorität: 01.09.2021 DE 202021104690 U
(43) Veröffentlichungstag der Anmeldung: 10.07.2024
(73) Patentinhaber: Samson Aktiengesellschaft, 60314 Frankfurt (DE)
(72) Erfinder: KOLBENSCHLAG, Stefan, 64291 Darmstadt (DE); LOENS, Martin, 60385 Frankfurt am Main (DE)
(74) Vertreter: Puschmann Borchert Kaiser Klettner Patentanwälte Partnerschaft mbB
(86) Internationale Anmeldenummer: PCT/EP2022/073831
(87) Internationale Veröffentlichungsnummer: WO 2023/031054

(56) Entgegenhaltungen:
- CN-B- 102 758 964
- DE-A1- 102014 015 888

## Beschreibung

Die Erfindung betrifft eine Stellventileinheit mit einer Messeinrichtung gemäß dem Oberbegriff des Anspruches 1.

Eine Stellventileinheit umfasst eine Ventilstange, die mittels einer Dichtanordnung gegenüber einem Ventilgehäuse abgedichtet ist. Die Dichtanordnung umfasst ein Dichtelement in der Art einer Stopfbuchse, die eine Packung und eine die Packung axial zusammenpressende Druckhülse aufweist, auf die insbesondere über ein Federelement eine Anpresskraft ausgeübt ist. In Abhängigkeit der Betriebsbedingungen, z.B. hohe Temperaturen und/oder aggressive Medien, kann die Packung aus unterschiedlichen Komponenten und/oder Werkstoffen, beispielsweise Aramid, Graphit, PTFE usw. unter Beigabe von diversen Schmier- und Imprägniermitteln hergestellt sein. Es stehen eine Vielzahl von Materialen zur Verfügung, die unterschiedliche Setzungseigenschaften aufweisen. Durch die axiale Pressung entsteht auch eine radiale Pressung des Dichtelements auf die Ventilstange und auf das Ventilgehäuse. Diese Art Dichtungen haben jedoch den Nachteil, dass sie im laufenden Betrieb Verschleiß und Setzungseigenschaften ausgesetzt sind und mit der Zeit undicht werden, wenn die Anpresskraft der Packung nachlässt. Ein automatisches axiales Nachspannen der Packung kann mittels vorgespannten Federelementen erfolgen.

Es ist wünschenswert ein frühzeitiges Nachlassen der Dichtigkeit der Dichtanordnung zu erkennen. So ist aus der US 5 549 305 A ein Rußbläser bekannt, der ein Zuführungsrohr zur Abgabe von Flüssigkeit an ein konzentrisch montiertes Lanzenrohr umfasst, wobei eine Dichtanordnung, die eine Packung zwischen der Innenfläche des Lanzenrohrs und der Außenfläche des Zuführungsrohrs aufweist, das Austreten der Flüssigkeit aus dem System verhindert. Um eine abdichtende Wirkung der Packung bei Verschleiß aufrecht zu erhalten, ist eine in Eingriff mit der Packung stehende Druckhülse durch eine Vielzahl von Schraubenfedern vorgespannt. Die Federn sind zwischen einem festen und einem beweglichen Anschlag einer Vorspanneinrichtung vorgespannt, die mit der Druckhülse verbunden ist.

Eine gewünschte Anpresskraft auf die Packung ist über die Anzahl und Anordnung der Federn einstellbar. In einer Ausführungsform kann eine Längung der Federn, die aufgrund der sich reduzierenden Vorspannkraft erfolgt, welche wiederum auf den Verschleiß der Packung zurückzuführen ist, mittels eines Bolzens erfasst werden, der in den beweglichen Anschlag eingeschraubt ist und sich durch eine am festen Anschlag befestigte Hülse erstreckt. Die Längung der Federn vergrößert den Abstand zwischen dem festen und dem beweglichen Anschlag, wodurch ein Kopf des Bolzens in die Hülse gezogen wird, bis er verschwindet. Dies ist ein Hinweis oder Signal, dass die Federn nachgespannt werden sollten.

Die DE 10 2014 015 888 A1 beschreibt eine gattungsbildende Stellventileinheit mit einer Messeinrichtung. Die Stellventileinheit umfasst eine Ventilstange, die über eine Dichtanordnung gegenüber einem Ventilgehäuse abgedichtet ist. Die Dichtanordnung weist eine axial komprimierbare Packung auf, die zwischen einem Gegenlager am Ventilgehäuse und einer Druckhülse aufgenommen ist. Die Druckhülse ist relativ zum Ventilgehäuse axial beweglich gelagert. Ein Federelement stützt sich über ein Druckelement auf die Druckhülse ab und überträgt eine Anpresskraft auf die Packung. Das Federelement stützt sich gegen eine Vorspanneinrichtung ab, welche im Abstand zum Gegenlager einstellbar ist. Dadurch ist die auf die Druckhülse wirkende Anpresskraft über eine Komprimierung des Federelements einstellbar. Mit einem Anzeigeelement einer Messeinrichtung wird eine Lageveränderung der Druckhülse relativ zum Gegenlager detektiert. Das Anzeigeelement ist derart kalibrierbar ausgebildet, dass die Anzeige relativ zur Lage der Vorspanneinrichtung nach Einstellung der Anpresskraft einstellbar ist.

Diese Art Dichtanordnungen sind im laufenden Betrieb Verschleiß und Setzungseigenschaften ausgesetzt. Dadurch lassen die axiale Pressung und die damit verbundenen radialen Dichtkräfte auf die Ventilstange und das Ventilgehäuse mit der Zeit nach und es besteht die Gefahr, dass Prozessfluid aus dem Ventilgehäuse entweicht. Bei Verschleiß und Setzungen der Packung erfolgt ein automatisches, axiales Nachspannen der Packung über vorgespannte Federelemente, die auf die Druckhülse wirken. Die Kräfte der Federelemente nehmen mit zunehmender Längung entsprechend der Federkennlinie ab.

Eine gattungsgemäße, die Merkmale des Oberbegriffes des Patentanspruches 1 aufweisende Stellventileinheit ist der Offenbarung der CN 102 758 964 B zu entnehmen.

Es ist Aufgabe der Erfindung, eine Stellventileinheit mit einer Messeinrichtung anzugeben, die mittels sensorischer Erkennung eine präzise und einfache Überwachung einer Anpresskraft einer Dichtanordnung ermöglicht.

Die Aufgabe wird durch die kennzeichnenden Merkmale des Anspruchs 1 in Verbindung mit seinen Oberbegriffsmerkmalen gelöst.

Die Unteransprüche bilden eine vorteilhafte Weiterentwicklung der Erfindung.

In bekannter Art und Weise weist eine Stellventileinheit eine Messeinrichtung auf und umfasst eine Dichtanordnung, die eine Ventilstange gegenüber einem Ventilgehäuse abdichtet. Die Dichtanordnung weist eine Stopfbuchse mit einer axial komprimierbaren Packung auf, die zwischen einem Gegenlager am Ventilgehäuse und einer axial beweglich zum Ventilgehäuse gelagerten Druckhülse aufgenommen ist. Auf die Druckhülse wird von wenigstens einem Federelement, das sich an einer Vorspanneinrichtung abstützt, eine Anpresskraft ausgeübt. Das Federelement stützt sich über ein Druckelement an der Druckhülse ab. Das Druckelement kann beispielsweise als ein Vorsprung der Druckhülse ausgebildet sein, z.B. eine ringförmige Schulter. Es ist auch denkbar, dass das Druckelement als ein Komprimierungsflansch ausgebildet ist, der einteilig mit der Druckhülse ausgebildet ist oder über einen Vorsprung der Druckhülse sich auf dieser abstützt.

Die Vorspanneinrichtung ist im Abstand zum Gegenlager einstellbar, wodurch eine entsprechende Anpresskraft des Federelements einstellbar ist. Die Vorspanneinrichtung kann beispielsweise über im Ventilgehäuse verankerte Anschlusselemente, z.B. Steh- oder Gewindebolzen, mit dem Ventilgehäuse verbunden sein. Dabei durchgreift das Anschlusselement das Federelement, dessen Spannkraft durch Anziehen von mit dem Anschlusselement verschraubten Schraubenmuttern erhöht wird. Bei Nachlassen der Dichtigkeit der Packung wird die Druckhülse mittels Anpresskraft des Federelements axial in Richtung Gegenlager bewegt.

Es ist auch denkbar, dass die Vorspanneinrichtung als ein zweiteiliges Gehäuse ausgebildet ist, das einen Stellkörper umfasst, der mit einem Stelldeckel verbunden ist. In dem Gehäuse ist ein sich in Axialrichtung erstreckendes Federelement zwischen einem ersten Anschlag sowie einem in Richtung Gegenlager dazu beabstandeten zweiten Anschlag eingespannt, wobei das Federelement unter Vorspannung in der Vorspanneinrichtung vormontiert ist, ohne auf die Druckhülse eine Anpresskraft auszuüben. Bei der Montage der Vorspanneinrichtung in die Stellventileinheit wird ein Innengewinde des Stellkörpers in ein Außengewinde des Ventilkörpers eingeschraubt. Dadurch entfernt sich der zweite Anschlag von dem Federelement, das sich nunmehr am ersten Anschlag der Vorspanneinrichtung sowie über das Druckelement an der Druckhülse abstützt. Das Federelement stützt sich insbesondere unter Zwischenlage eines Komprimierungsflansches auf der Druckhülse ab. Der sich verringernde axiale Abstand zwischen dem ersten Anschlag und dem Druckelement erhöht die Spannkraft des Federelements im eingebauten Zustand der Vorspanneinrichtung.

Durch die Energie der Vorspannkraft übt das Federelement eine Anpresskraft auf das Druckelement und auf die Druckhülse aus, um diese bei Verschleiß oder Setzen der Packung axial in Richtung Gegenlager zu bewegen. In Abhängigkeit der Zusammensetzung der Packung soll die Vorspannkraft nicht zu fest eingestellt sein, um beispielsweise eine Reibung der Ventilstange gering zu halten. Sie muss jedoch hoch genug eingestellt sein, um sicherzustellen, dass radiale Dichtkräfte ein Entweichen eines Prozessfluids vermeiden. Bei nachlassender Anpresskraft wird die Packung über die Vorspannkraft des Federelements automatisch nachgespannt. Der zweite Anschlag kann beispielsweise als Begrenzung der axialen Federauslenkung und somit der axialen Lageveränderung der Druckhülse dienen, um frühzeitig eine Leckage des Prozessfluids bei nachlassender Dichtigkeit der Packung zu verhindern.

Über eine Messeinrichtung, die ein Messelement umfasst, kann eine Lageveränderung des Druckstücks relativ zum Gegenlager ermittelt werden. Die Detektion kann auf einer induktiven, kapazitiven, magnetischen oder potentiometrischen Funktionsweise oder dergleichen basieren. Es ist auch denkbar, dass das Messelement als ein Schalter ausgebildet ist, der durch ein Betätigungsmittel betätigt ist, um die Lagerveränderung der Druckhülse zu detektieren.

Durch die Relativbewegung kann auf einen entsprechenden Verschleiß der Packung geschlossen werden. Je nach Setzungseigenschaften und Lebensdauer der Packung kann bei maximaler Auslenkung des Federelements entweder das Federelement über die Vorspanneinrichtung nachgespannt werden oder die erschöpfte Packung kann ausgewechselt werden, um eine Packungsleckage durch nachlassende Dichtigkeit der Packung zu vermeiden.

Erfindungsgemäß weist die Messeinrichtung zur Überwachung der Anpresskraft auf die Packung eine Sensoreinheit auf, die mit der Vorspanneinrichtung verbunden ist und mit einem Magneten zusammenwirkt, der mit der Druckhülse verbunden ist, wobei der Magnet axial führbar gelagert an der Vorspanneinrichtung angeordnet ist. Die Sensoreinheit weist einen magnetempfindlichen Sensor auf, der lagefest an der Vorspanneinrichtung angeordnet ist. Der Sensor wirkt mit einem Magneten zusammen, der mit der Druckhülse verbunden ist, um Veränderungen einer axialen Lage der Druckhülse gegenüber der Vorspanneinrichtung berührungslos und verschleißfrei zu messen. Der Sensor kann beispielsweise als ein xMR-Chip oder als ein Hall-Effekt Sensor ausgebildet sein. Magnetsensoren sind unempfindlich gegenüber Temperaturschwankungen und weisen eine hohe Genauigkeit sowie Robustheit auf.

Der mit der Druckhülse verbundene Magnet ist axial führbar gelagert an der Vorspanneinrichtung angeordnet. Der Magnet ist mit der Druckhülse verbunden, d.h. eine axiale Lageveränderung der Druckhülse bewirkt eine axiale Lageveränderung des mit ihr verbundenen Magneten. Dabei ist der Magnet in einer Axialführung an der Vorspanneinrichtung angeordnet. Er ist nahezu spielfrei und radial formschlüssig, d.h. herausfallsicher, in der Axialführung angeordnet. Dadurch wird er bei einer Axialbewegung der Druckhülse innerhalb der Führung mitgenommen. Der Magnet ist an der Vorspanneinrichtung räumlich getrennt vom Sensor angeordnet, und verbleibt aufgrund der nahezu spielfreien, axialen Führung in einem festen radialen Abstand relativ zum Sensor. Der Magnet bewegt sich relativ zum lagefest angeordneten Sensor. Dadurch kann die Sensoreinheit in Axialrichtung eine stabile Abstandsmessung gegenüber dem Magneten erbringen, und somit eine präzise axiale Lageveränderung der Druckhülse ermitteln, wobei die Relativbewegung auf einen entsprechenden Verschleiß der Packung schließen lässt. Es ist sowohl eine schrittweise Lageerfassung als auch eine kontinuierliche Lageerfassung der Druckhülse möglich, wobei die axiale Lageveränderung der Druckhülse mit einer Veränderung der Federvorspannkraft und somit einer Anpresskraft der Packung einhergeht. Somit kann über die Sensoreinheit die Anpresskraft der Packung überwacht werden.

Die Messeinrichtung weist einen mit der Vorspanneinrichtung verbundenen Führungskörper auf, der eine axiale Führungsnut ausbildet, in welcher der Magnet herausfallsicher angeordnet ist. Der Führungskörper kann beispielsweise als ein Gehäuse, ein Schraubbolzen, eine Schiene oder dergleichen ausgebildet sein. Der Führungskörper bildet eine sich in Axialrichtung erstreckende Führungsnut aus, in welcher der Magnet axial beweglich angeordnet ist. Die Führungsnut ist durch eine Materialentnahme an einer Längsseite des Führungskörpers gebildet, wobei die Längsseite hin zur Ventilstange gerichtet ist und an der Druckhülse angeordnet ist.

Der Magnet und eine durch die Materialentnahme des Führungskörpers gebildete Begrenzung der Führungsnut weisen komplementäre Formen auf. Dadurch ist der Magnet herausfallsicher und nahezu spielfrei in der Führungsnut angeordnet. In Axialrichtung betrachtet kann der Magnet beispielsweise zylinderförmig und die Führungsnut als ein Lochkreis ausgebildet sein. Die Führungsnut weist eine Begrenzung auf, die im Querschnitt den die Führungsnut bildenden Lochkreis zumindest teilweise über einen Äquator hinaus umgreift. Der Führungskörper kann beispielsweise eine im Querschnitt halbmondförmige Begrenzung der Führungsnut ausbilden.

Vorzugsweise ist die Sensoreinheit am Führungskörper angeordnet. Der Führungskörper kann beispielsweise als ein Sensorgehäuse ausgebildet sein, in dem die Sensoreinheit angeordnet ist. Auf diese Weise ist die Sensoreinheit, die beispielsweise in einer schwierigen Umgebung eingesetzt ist, in einem sicheren Bereich montiert. Der als Sensorgehäuse ausgebildete Führungskörper trägt zur Robustheit und Widerstandsfähig der Sensoreinheit in rauen Außeneinsätzen bei.

Der Sensor der Sensoreinheit und der Magnet sind im Führungskörper räumlich getrennt voneinander untergebracht. Durch die axiale Führung des Magneten in der Führungsnut verbleibt der Magnet immer in einem festen radialen Abstand relativ zur lagefest montierten Sensoreinheit. Dadurch ist eine stabile Abstandsmessung der Messeinrichtung in Axialrichtung ermöglicht. Auf diese Weise ist über den Magnetsensor eine zuverlässige Verschleißanzeige der Packung gewährleistet.

Die Vorspanneinrichtung und der als Sensorgehäuse ausgebildete Führungskörper, in dem der Sensor angeordnet ist, können insbesondere als eine vormontierbare Baugruppe ausgebildet sein. Das trägt zur vereinfachten Montage der Stellventileinheit bei. Der Führungskörper kann insbesondere fest mit der Vorspanneinrichtung verbunden sein. Er kann beispielsweise einteilig mit der Vorspanneinrichtung ausgebildet sein. Alternativ ist es möglich, dass der Führungskörper lösbar mit der Vorspanneinrichtung verbunden ist, z.B. können sie miteinander verschraubt oder verklipst sein. Das hat den Vorteil, dass der Führungskörper beispielsweise erst nach Einstellen des Abstands der Vorspanneinrichtung zum Gegenlager mit der Vorspanneinrichtung verbunden werden kann, wodurch insbesondere ein Verdrehen einer Verkabelung der Sensoreinheit und/oder Kontrolleinheit verhindert ist.

Vorzugsweise ist der Magnet in Umfangsrichtung der Ventilstange drehbar angeordnet. Der Magnet kann beispielsweise bei einer Rotation der Vorspanneinrichtung um ihre Achse mitgenommen werden und um die koaxial zur Ventilstange angeordnete Druckhülse gedreht werden, wobei der Magnet sowohl mit der Druckhülse verbunden als auch in der Führungsnut des Führungskörpers axial beweglich gelagert ist. Diese Ausführungsform ist insbesondere dann vorteilhaft, wenn die Vorspanneinrichtung zur Vorspannung des Federelements über den Stellkörper in das Ventilgehäuse eingeschraubt wird, wobei der Führungskörper entweder einteilig mit der Vorspanneinrichtung ausgebildet ist, oder die Vorspanneinrichtung und der Führungskörper als Baugruppe vormontiert sind.

Gemäß einer bevorzugten Ausführungsform ist der Magnet über ein magnetisch leitendes Haftelement mit der Druckhülse verbunden. Das Haftelement ist an einem freien Ende der Druckhülse, d.h. an einem aus der Vorspanneinrichtung hervorragenden Ende der Druckhülse mit dieser verbunden. Die Druckhülse ist aus einem nicht magnetischen Material gebildet. Der Magnet haftet durch seine Magnetkraft an dem Haftelement, über welches er mit der Druckhülse verbunden ist.

Vorzugsweise ist das Haftelement über einen Befestigungsring mit der Druckhülse verbunden. Durch den insbesondere arretierbaren Befestigungsring ist das Haftelement und folglich auch der Magnet lagefest an der Druckhülse angeordnet.

Bevorzugt umgreift das Haftelement die Ventilstange radial. Das Haftelement kann beispielsweise ringförmig ausgebildet sein. Das Haftelement ist insbesondere als stirnseitiger Ring an der Druckhülse angeordnet, d.h. der Magnet ist an einer Stirnseite der Druckhülse mit dieser verbunden.

Gemäß einer bevorzugten Ausführungsform dringt das Haftelement zumindest teilweise radial in die Führungsnut des Führungskörpers ein. Die Führungsnut ist durch eine Materialentnahme an einer Längsseite des Führungskörpers gebildet, die hin zur Ventilstange bzw. Druckhülse gerichtet ist. Das Haftelement, das insbesondere ringförmig ausgebildet sein kann, dringt zumindest teilweise in die Führungsnut ein, die in Richtung Ventilstange an der Druckhülse und somit am Haftelement angeordnet ist. Im Bereich der Materialentnahme kann das Haftelement in radialer Richtung in den Führungskörper eindringen. In Axialrichtung betrachtet überschneiden sich das Haftelement und der Führungskörper im Bereich der Materialentnahme, d.h. in einem Bereich der Führungsnut. Das zumindest teilweise Eindringen des Haftelements in die Führungsnut ermöglicht, dass die Druckhülse den insbesondere stirnseitig an ihr angeordneten Magneten in Axialrichtung in der Führungsnut mitnimmt, wenn sie sich aufgrund des Verschleißes der Packung axial bewegt.

Gemäß einer bevorzugten Ausführungsform ist die Sensoreinheit kommunizierend mit einer Kontrolleinheit verbunden, die über eine Kraft-Wegkennlinie des Federelements die Anpresskraft auf die Packung ermittelt. Die Sensoreinheit kommuniziert bidirektionell mit der Kontrolleinheit zur Verarbeitung von Messdaten des Sensors. Die Sensoreinheit kann beispielsweise mit einer integrierten Mikroelektronik ausgebildet sein, um die Messdaten im Sensor zu verarbeiten. Der Sensor und die Kontrolleinheit können beispielsweise auf einem Chip integriert sein. Es ist auch denkbar, dass der Sensor mit einer externen Kontrolleinheit verbunden ist, d.h. der Sensor und die Kontrolleinheit sind separat ausgebildet.

Zur Überwachung der Anpresskraft ist der Sensor als ein Kraftsensor kalibriert. Dazu kann die Kraft-Wegkennlinie des Federelements in einem Datenspeicher der Kontrolleinheit hinterlegt sein. Die Kraft-Wegkennlinie beschreibt das Verhältnis zwischen Federkraft und Federweg und zeigt, wie das Federelement sich bei der Arbeit verhält. Je nach Ausführungsform verhält sich das Federelement unterschiedlich bei der Arbeit. Das Federelement kann insbesondere als ein kompaktes Tellerfederpaket ausgebildet sein, das sich zum Einbau in begrenzte Bauräume eignet, bei denen trotzdem hohe Kräfte benötigt werden. Alternativ ist es auch denkbar, dass das Federelement als eine Schraubendruckfeder ausgebildet ist. Aufgrund der gemessenen axialen Lageveränderung der Druckhülse kann über die Kraft-Wegkennlinie im laufenden Betrieb der Stellventileinheit die verbleibende Vorspannkraft des Federelements über Zeit angezeigt werden. Somit kann auch die axiale Veränderung der Kraft auf die Packung über Zeit erfasst werden.

Die Kontrolleinheit kann beispielsweise zur Überwachung, Steuerung und Regelung von Packungsvorspannung relevanten Funktionen eingesetzt werden, beispielsweise das automatische Kontrollieren, Erreichen und Einhalten der gewünschten Anpresskraft auf die Packung. Über eine Vernetzung der Kontrolleinheit mit weiteren Geräten ist eine präzise Überwachung und Wiedergabe einer Positionserkennung der Druckhülse und somit einer Packungsvorspannung, sowie ein automatisches Anpassen der Packungsvorspannung ermöglicht.

Bevorzugt ist die Kontrolleinheit mit einer Bedieneinheit kommunizierend verbunden, wobei die Bedieneinheit wenigstens eine Anzeigeeinheit sowie eine Kalibrierungstaste aufweist. Die verarbeiteten Messdaten des Sensors können an die Anzeigeeinheit weitergeleitet werden, damit z.B. ein Benutzer diese ablesen kann. Es ist denkbar, dass die Kontrolleinheit z.B. über Bluetooth oder Internet mit der Bedieneinheit verbunden ist, die beispielsweise als ein mobiles Endgerät wie ein Telefon, Tablet oder dergleichen ausgebildet sein kann. Die Anzeigeeinheit ermöglicht, dass die Vorspannkraft des Federelements im vormontierten Zustand der Vorspanneinrichtung, bei der Montage der Vorspanneinrichtung sowie während einer Inbetriebnahme der Stellventileinheit angezeigt und überwacht werden kann.

Mit der Kalibrierungstaste der Bedieneinheit ist es möglich den Sensor auf elektronischem Weg sehr präzise auf eine Nulllage einzustellen. Der Sensor dient zur Erfassung einer Relativbewegung des Magneten und folglich einer Lageveränderung der Druckhülse. Die Kontrolleinheit verarbeitet die Messdaten des Sensors mit einer Auswerteelektronik und leitet Positionswerte der Druckhülse an die Anzeigeeinheit weiter. Im laufenden Betrieb kann nun jederzeit ein Positionswert der Druckhülse abgelesen werden. Es ist sowohl eine diskrete Lageerfassung als auch eine kontinuierliche Lageerfassung der Druckhülse über Zeit möglich. So kann der Benutzer der Stellventileinheit die Lageveränderung der Druckhülse über die Anzeigeeinheit ablesen und auf einen Verschleiß der Packung schließen. Erreicht der Positionswert des Sensors bzw. der Druckhülse eine vordefinierte Schwelle, so kann beispielsweise ein Alarm ausgegeben werden, damit die Packung entweder nachgespannt oder gewechselt wird.

Ferner ist über die Kraft-Wegkennlinie zusammen mit dem Sensor eine exakte Einstellung der axialen Spannkraft des Federelements und eine den Betriebsbedingungen angepasste Anpresskraft auf die Packung ermöglicht. Der Sensor ist bereits vor der Montage der Vorspanneinrichtung in die Stellventileinheit als Kraftsensor kalibriert, damit das Federelement auf eine gewünschte Anpresskraft eingestellt werden kann. Bei der Montage der Vorspanneinrichtung in die Stellventileinheit ist ein Messanfang für den Sensor relativ zum Gegenlager mit der Kalibrierungstaste festgelegt. Der Sensor wird am vordefinierten Messanfang dem Magneten gegenüber genullt. Dann wird der Abstand der Vorspanneinrichtung gegenüber dem Gegenlager verringert, wodurch sich die Vorspannkraft des Federelements erhöht. Dabei bewegt sich die Vorspanneinrichtung zusammen mit der Sensoreinheit in Richtung Gegenlager, so dass sich der Sensor relativ zum Magnet bewegt. Die axiale Lageveränderung der Vorspanneinrichtung entspricht einer Veränderung der Vorspannkraft des Federelements. So kann die Lageveränderung der Vorspanneinrichtung bis zu einem vordefinierten Sensorwert erfolgen, der einer gewünschten Vorspannkraft des Federelements entspricht. Auf diese Weise kann eine vordefinierte axiale Anpresskraft gegen die Packung erreicht werden, wobei die Anpresskraft insbesondere auf die Betriebsbedingungen unterschiedlich hergestellter und mit unterschiedlichen Längen ausgebildeten Packungen ausgerichtet ist.

Bevorzugt ist die Kontrolleinheit mit wenigstens einem Aktor verbunden, der mit der Vorspanneinrichtung verbunden ist. Der Aktor ist beispielsweise mit den mit dem Anschlusselement verschraubten Schraubenmuttern der Vorspanneinrichtung verbunden. Alternativ kann der Aktor mit dem Stellkörper des Gehäuses der Vorspanneinrichtung verbunden sein. Der Aktor wandelt von der Kontrolleinheit empfangene Daten in eine mechanische Bewegung bzw. Rotation um. Bei Verschleiß und/oder Setzung der Packung bzw. bei Erreichen einer voreingestellten Schwelle der Lageveränderung der Druckhülse und/oder einer voreingestellten Vorspannkraft des Federelements erfolgt in vorteilhafter Weise ein automatisches, axiales Nachspannen der Packung, indem der Aktor durch Anziehen der Vorspanneinrichtung die Spannkraft des Federelements nachstellt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: ein Ausschnitt einer Schnittansicht einer erfindungsgemäßen Stellventileinheit in einer ersten Ausführungsform;
- Fig. 2: ein Ausschnitt einer Schnittansicht einer erfindungsgemäßen Stellventileinheit in einer ersten Ausführungsform im Betriebszustand der Stellventileinheit;
- Fig. 3: eine perspektivische Draufsicht auf eine Messeinrichtung einer erfindungsgemäßen Stellventileinheit nach Fig. 1 von schräg oben;
- Fig. 4: eine Draufsicht auf eine Messeinrichtung einer erfindungsgemäßen Stellventileinheit nach Fig. 3 von oben;
- Fig. 5: ein Ausschnitt einer Schnittansicht einer erfindungsgemäßen Stellventileinheit in einer zweiten Ausführungsform; und
- Fig. 6: eine perspektivische Draufsicht auf eine zweite Ausführungsform einer erfindungsgemäßen Stellventileinheit nach Fig. 5 von schräg oben.

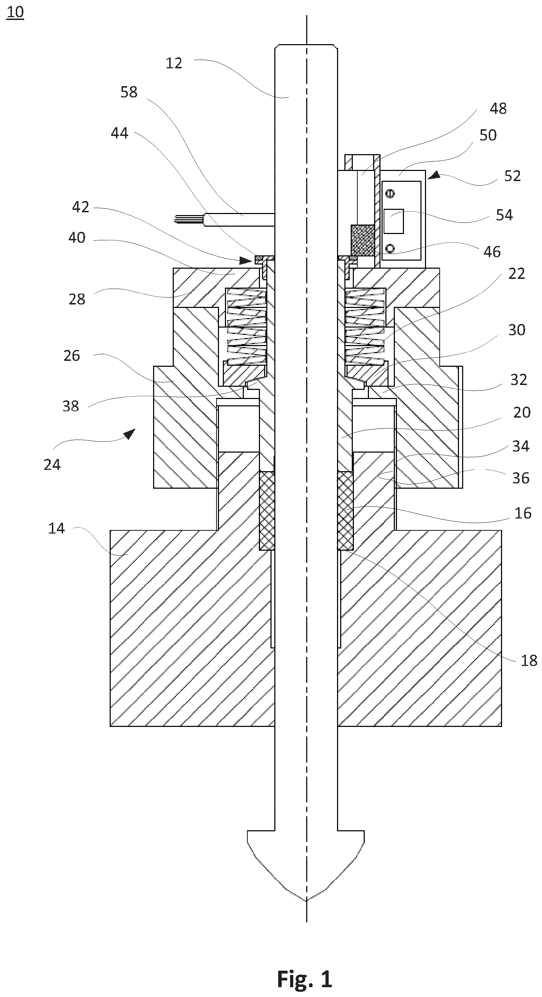

Fig. 1 bis Fig. 6 zeigen in einer schematischen Darstellung eine insgesamt mit der Bezugsziffer 10 bezeichnete erfindungsgemäße Stellventileinheit.

In Fig. 1 ist ein Ausschnitt einer ersten Ausführungsform einer erfindungsgemäßen Stellventileinheit 10 mit einer Messeinrichtung 52 gezeigt. Die Stellventileinheit 10 weist eine Ventilstange 12 und ein Ventilgehäuse 14 auf. Die Ventilstange 12 ist gegenüber dem Ventilgehäuse 14 über eine Dichtanordnung abgedichtet, die eine Packung 16 aufweist.

Die Packung 16 ist in axialer Richtung zwischen einem Gegenlager 18 und einer Druckhülse 20 angeordnet, die axial verschiebbar gegenüber dem Ventilgehäuse 14 gelagert ist. Das Gegenlager 18 kann Bestandteil des Ventilgehäuses 14 sein oder im Ventilgehäuse 14 fest angeordnet sein. Durch die federvorgespannte Druckhülse 20 kann die Packung 16 axial komprimiert werden, wodurch eine axiale sowie radiale Dichtwirkung der Packung 16 erreicht ist.

Die Anpresskraft zur Komprimierung der Packung 16 wird von einem Federelement 22 bereitgestellt, das vorliegend als ein zentriertes Tellerfederpaket ausgebildet ist, welches die Ventilstange 12 radial umgreift. Das Federelement 22 stützt sich an einer Vorspanneinrichtung 24 ab. Die Vorspanneinrichtung 24 weist einen Stellkörper 26 auf, der dichtend mit einem Stelldeckel 28 verbunden ist. An einem vom Stelldeckel 28 ausgebildeten ersten Anschlag 40 stützt sich ein erstes Ende des Federelements 22 ab. Das jeweils andere Ende des Federelements 22 stützt sich vorliegend unter Zwischenlage eines Druckelements 30 in der Form eines Komprimierungsflansches an einem zweiten Anschlag 32 ab, der vom Stellkörper 26 ausgebildet ist.

Das Federelement 22 ist im vormontierten Zustand der Vorspanneinrichtung 24, insbesondere bei kleinem Einbauraum, zwischen dem ersten Anschlag 40 und dem zweiten Anschlag 32 axial vorgespannt, so dass es bereits im Ruhezustand, d.h. vordem es eine Anpresskraft auf die Druckhülse 20 ausübt, eine Vorspannkraft erzeugt. Mit anderen Worten ist das Federelement 22 in der Vorspanneinrichtung 24 auf eine gewünschte Vorspannkraft eingestellt und wird in einem vorgespannten Zustand in die Stellventileinheit 10 eingebaut.

Zur Montage der Vorspanneinrichtung 24 in die Stellventileinheit 10 weist der Stellkörper 26 an einer Innenseite ein Stellgewinde 34 auf, das mit einem Außengewinde 36 des Ventilgehäuses 14 in Eingriff gebracht wird. Durch Anziehen des Stellkörpers 26 wird das Stellgewinde 34 in das Außengewinde 36 eingedreht. Vorliegend ist das Federelement 22 lediglich zwischen dem ersten Anschlag 40 und dem zweiten Anschlag 32 eingespannt, ohne eine axiale Anpresskraft auf die Packung 16 zu verüben. D.h. die Druckhülse 20 liegt ohne Anpresskraft unmittelbar an der Packung 16 an. Die Vorspanneinrichtung 24 bzw. der zweite Anschlag 32 befindet sich vorliegend in einer Ausgangsposition, die beispielsweise als eine Nullposition zur Messung einer Lageveränderung der Druckhülse 20 aufgrund der Setzungseigenschaften der Packung 16 definiert werden kann.

An einem aus der Vorspanneinrichtung 24 herausragenden Ende der Druckhülse 20 ist ein umlaufender Befestigungsring 42 angeordnet, der ein Haftelement 44 aus magnetisch leitendem Material stirnseitig mit der Druckhülse 20 verbindet. Ein vorliegend zylinderförmiger Magnet 46 haftet mittels Magnetkraft am Haftelement 44. Der Magnet 46 ist axial beweglich in einer Führungsnut 48 eines mit der Vorspanneinrichtung 24 verbundenen Führungskörpers 50 aufgenommen. Der Magnet 46 kann sich axial gleitend nahezu reibungs- und spielfrei bewegen. Dadurch kann er bei einer axialen Lageveränderung der Druckhülse 20 stets mitgenommen werden.

Im Führungskörper 50 ist eine Sensoreinheit 54 mit einem magnetsensitiven Sensor angeordnet, beispielsweise ein xMR-Chip oder ein Hall-Effekt Sensor, der die axiale Bewegung des Magneten 46 berührungslos erfassen kann. Der Führungskörper 50 ermöglicht, dass in Radialrichtung der Vorspanneinrichtung 24 ein enger, fester Abstand zwischen dem Magnet 46 und der Sensoreinheit 54 eingehalten ist, um eine axiale Wegmessung oder Position des Magneten 46 zuverlässig zu erfassen. Vorliegend befindet sich der Magnet 46 ausgehend von der Sensoreinheit 54 in einem Bereich eines optimalen Messanfangs, d.h. in einer axial niedrigen Position relativ zum Sensor.

Die Sensoreinheit 54 kommuniziert bidirektionell mit einer vorliegend nicht dargestellten Kontrolleinheit, in deren Datenspeicher eine Kraft-Wegkennlinie des Federelements 22 hinterlegt ist und die mittels einer Auswertelektronik die Messdaten der Sensoreinheit 54 verarbeitet. Die Kontrolleinheit ist mit einer vorliegend ebenfalls nicht dargestellten Bedieneinheit kommunizierend verbunden ist, die zumindest eine Anzeigeeinheit und eine Kalibrierungstaste aufweist, mit welcher der Sensor beispielsweise in der oben beschriebenen Ausgangsposition der Vorspanneinrichtung 24 genullt werden kann. Ausgehend von der Null-Position des Magneten 46 relativ zum Sensor kann die Sensoreinheit 54 eine Relativbewegung des Magneten 46, und folglich eine relative Axialbewegung der Druckhülse 20 überwachen, wobei die ausgewerteten Messdaten auf einer Anzeigeeinheit der Bedieneinheit angezeigt sind.

Der Sensor ist in vorteilhafter Weise als ein Kraftsensor kalibriert. Dadurch kann die Vorspannkraft des Federelements 22 im vormontierten Zustand der Vorspanneinrichtung 24 sowie die Anpresskraft auf die Packung 16 beim Montieren der Vorspanneinrichtung 24 in die Stellventileinheit 10 angezeigt werden und der Stellkörper 26 dementsprechend nachgezogen bzw. verschraubt werden. Es ist denkbar, dass die Messeinrichtung 52 zusätzlich zum Kabelanschluss 58 eine Batterie oder einen Akku aufweist und somit vor einer Inbetriebnahme der gesamten Stellventileinheit 10 mit Strom versorgt ist. Dadurch sind eine Kalibration des Sensors sowie eine Darstellung der auf die Packung 16 wirkende Anpresskraft auf der Anzeigeeinheit vor der Inbetriebnahme der Stellventileinheit 10 möglich.

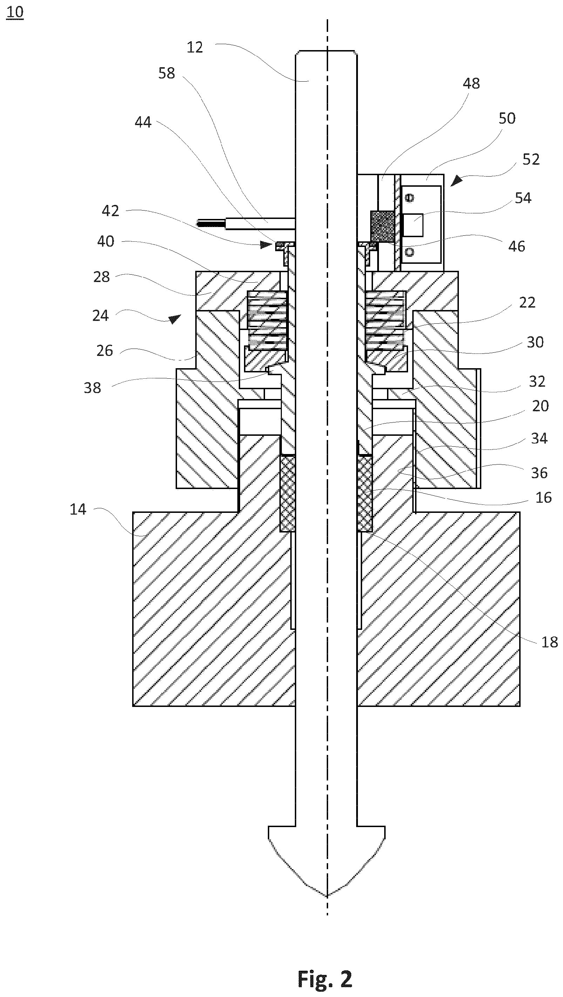

In Fig. 2 ist die erste Ausführungsform der Stellventileinheit 10 in einem Betriebszustand dargestellt, d.h. im vorgespannten Zustand der Packung 16. Zur exakten Einstellung der Anpresskraft, mit der das Federelement 22 auf die Packung 16 wirkt, kann die Sensoreinheit 54 in Kombination mit der in der Kontrolleinheit hinterlegten Kraft-Wegkennlinie des Federelements 22 genutzt werden.

Über die Vorspanneinrichtung 24 ist eine gewünschte axiale Vorspannkraft auf die Packung 16 einstellbar. Der Stellkörper 26 wird aus der oben in Fig. 1 beispielhaft beschriebenen Nullposition weiter in das Ventilgehäuse 14 eingedreht. Das hat zur Folge, dass sich der erste Anschlag 40 sowie der zweite Anschlag 32 in Richtung Gegenlager 18 bewegen. Dadurch weist der zweite Anschlag 32 einen axialen Abstand zum Druckelement 30 auf und das Federelement 22 wird zwischen dem ersten Anschlag 40 und dem Druckelement 30 weiter komprimiert, so dass die Vorspannkraft des Federelements 22 und folglich eine Anpresskraft auf die Druckhülse 20 sowie auf die Packung 16 erhöht ist.

Die axiale Bewegung der Vorspanneinrichtung 24 in Richtung Gegenlager 18 hat ferner zur Folge, dass die Druckhülse 20 sich aus dem Stelldeckel 28 der Vorspanneinrichtung 24 heraus erstreckt, so dass der durch die Druckhülse 20 mitgenommene Magnet 46 sich relativ zur Sensoreinheit 54 bewegt. Die Vorspanneinrichtung 24 wurde vorliegend im Vergleich zu Fig. 1 über mehrere Rotationen des Stellkörpers 26 in das Ventilgehäuse 14 eingeschraubt, wodurch der Magnet 46 und die Sensoreinheit 54 vorliegend auf gleicher axialer Höhe sich gegenüberliegend angeordnet sind.

Die axiale Relativverschiebung des Magneten 46 entspricht einer Komprimierung des Federelements 22, und somit einer spezifischen Veränderung der Vorspannkraft des Federelements 22, die über die Kraft-Wegkennlinie ermittelt werden kann und über eine mit der Sensoreinheit 54 verbundene, vorliegend nicht dargestellte Bedieneinheit angezeigt werden kann. Aufgrund der axialen Verstellung der Vorspanneinrichtung 24 bzw. des zweiten Anschlags 32 in Richtung Gegenlager 18 wirkt das vorgespannte Federelement 22 nun auf die Packung 16. Der Stellkörper 26 wird aus der Nullposition so weit in das Ventilgehäuse 14 eingedreht, bis eine exakte Einstellung der gewünschten Vorspannkraft auf die Packung 16 erreicht ist. Das kann beispielsweise mittels eines mit dem Stellkörper 26 verbundenen Aktors, der über die Kontrolleinheit ansteuerbar ist, automatisch erreicht werden. So kann die axiale Anpresskraft angepasst auf die Betriebsbedingungen unterschiedlich hergestellter und mit unterschiedlichen Längen ausgebildeten Packungen 16 einfach eingestellt werden.

Aufgrund der Verschleiß- und/oder Setzungseigenschaften der Packung 16 weist die federvorgespannte Druckhülse 20 eine axiale Bewegung relativ zum zweiten Anschlag 32 auf. Diese Bewegung ist proportional zu einem Setzweg der Packung 16 und lässt auf den Verschleißzustand der Packung 16 schließen. Bei der axialen Bewegung der Druckhülse 20 wird der Magnet 46 stets mitgenommen. Folglich entspricht die axiale Bewegung des Magneten 46 relativ zur Sensoreinheit 54 der Bewegung der Druckhülse 20 relativ zum zweiten Anschlag 32. Im laufenden Betrieb kann nun jederzeit ein Sensorwert, der einer Position der Druckhülse 20 entspricht, von einer Anzeigeeinheit der Bedieneinheit abgelesen werden. Auf diese Weise kann der Setzvorgang der Packung 16 über Zeit gemessen und überwacht werden. Über die Kraft-Wegkennlinie des Federelements 22 lässt sich die Vorspannkraft, mit der das Federelement 22 auf die Packung 16 wirkt, sowie deren Veränderung über Zeit ableiten. Diese Vorspannkraft kann zur entsprechenden Nachstellung der Federvorspannung ebenfalls angezeigt und überwacht werden.

Die Druckhülse 20 gibt den Anpresskräften des Federelements 22 so lange nach, bis das Druckelement 30 am zweiten Anschlag 32 anliegt. Der zweite Anschlag 32 begrenzt die Auslenkung des vorgespannten Federelements 22 und somit die axiale Lageveränderung der Druckhülse 20. Bei Überschreiten eines kritischen Setzwerts der Packung 16 und/oder bei Überschreiten und/oder Unterschreiten einer vordefinierten Vorspannkraft kann beispielsweise ein Alarm ausgelöst werden. Je nach Beschaffenheit und/oder Ausführungsform der Packung 16 ist entweder ihre Lebensdauer erschöpft und sie muss ausgewechselt werden oder sie muss nachgespannt werden, beispielsweise durch automatisches Nachziehen der Vorspanneinrichtung 24 durch den mit dem Stellkörper 26 verbundenen Aktor.

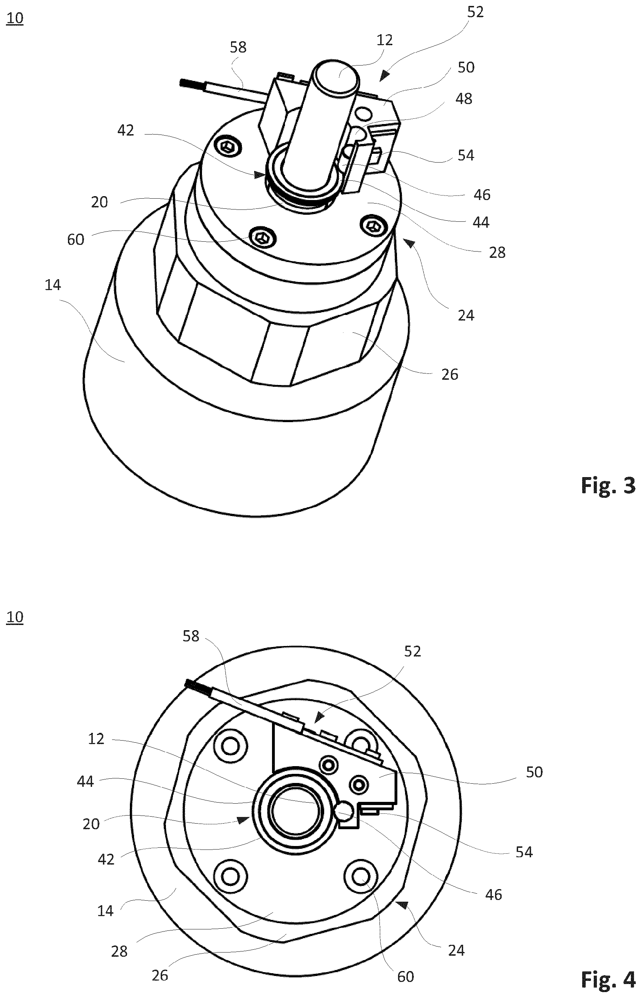

Fig. 3 zeigt eine perspektivische Draufsicht von schräg oben auf eine erste Ausführungsform einer erfindungsgemäßen Stellventileinheit 10 mit einer Messeinrichtung 52 nach Fig. 1. Die Stellventileinheit 10 weist eine Vorspanneinrichtung 24 auf, die ein Gehäuse mit einem Stelldeckel 28 und einem Stellkörper 26 aufweist, welche eine federvorgespannte Druckhülse 20 radial umschließen. Der Stelldeckel 28 ist über Schraubverbindungen 60 lösbar mit dem Stellkörper 26 verbunden, wodurch ein vorliegend nicht dargestelltes Federelement 22 axial vorgespannt in der Vorspanneinrichtung 24 einfach montiert werden kann.

Die Spannkraft des Federelements 22 ist vorliegend über den Stellkörper 26 der Vorspanneinrichtung 24 einstellbar. Der Stellkörper 26 weist ein vorliegend nicht dargestelltes inneres Stellgewinde 34 zur Verbindung mit einem ebenfalls vorliegend nicht dargestellten Außengewinde 36 eines Ventilgehäuses 14 auf. Das Eindrehen des Stellkörpers 26 in das Ventilgehäuse 14 bewirkt ein weiteres Komprimieren des Federelements 22 zwischen dem Stelldeckel 28 und der Druckhülse 20. Zum Nachstellen der Vorspanneinrichtung 24 weist der Stellkörper 26 vorliegend eine Mantelfläche auf, die mit einem Antriebsprofil für einen Gabelschlüssel ausgebildet ist. Es ist auch denkbar, dass der Stellkörper 26 ein Antriebsprofil für ein anderes Werkzeug, z.B. einen Nasen-Hakenschlüssel aufweisen kann. Das Nachstellen kann alternativ über einen mit dem Stellkörper 26 verbundenen Aktor erfolgen. Über eine definierte Anzahl von Umdrehungen des Stellkörpers 26 relativ zum Ventilgehäuse 14 ist eine vordefinierte Vorspannkraft einstellbar, mit der das Federelement 22 auf eine vorliegend nicht dargestellte Packung 16 einer Dichtanordnung der Stellventileinheit 10 wirken soll. Alternativ erfolgt das Nachstellen so lange, bis die Anzeigeeinheit wieder die empfohlene Vorspannung für die Packung 16 anzeigt. Das kann beispielsweise über eine entsprechende Regelung des Aktors erfolgen.

An der Vorspanneinrichtung 24 ist eine Messeinrichtung 52 angeordnet. Die Messeinrichtung 52 weist einen Führungskörper 50 auf, in dem vorliegend eine Sensoreinheit 54 lagefest angeordnet ist. Die Sensoreinheit 54 weist einen magnetischen Sensor auf, der mit einem mit der Druckhülse 20 verbundenen Magneten 46 zusammenwirkt, um eine Lagerveränderung der Druckhülse 20 aufgrund des Verschleißes und/oder der Setzungseigenschaften der Packung 16 zu ermitteln. Die Axialbewegung der Druckhülse 20 ist durch die Relativbewegung des Magneten 46 relativ zum Sensor der Sensoreinheit 54 ermittelbar. Zur zuverlässigen Erfassung einer axialen Wegmessung des Magneten 46 ist der Sensor in einem radial festen Abstand zum Magneten 46 im Führungskörper 50 der Messeinrichtung 52 angeordnet.

Der Führungskörper 50 ist an einer koaxial zur Druckhülse 20 angeordneten Ventilstange 12 angeordnet. An einer Längsseite des Führungskörpers 50, die in Richtung Druckhülse 20 angeordnet ist, weist der Führungskörper 50 eine sich in Axialrichtung erstreckende Führungsnut 48 auf, in welcher der Magnet 46 axial beweglich gelagert ist. Vorliegend ist der Magnet 46 zylinderförmig ausgebildet und der Führungskörper 50, der den Magneten 46 radial teilweise umgreift, weist im Bereich der Führungsnut 48 eine komplementäre Form zum Magneten 46 auf, so dass der Magnet 46 nahezu spielfrei in der Führungsnut 48 angeordnet ist.

Der Magnet 46 ist magnetisch haftend mit der Druckhülse 20 verbunden. Dazu ist ein arretierbarer Befestigungsring 42 an einem freien Ende der Druckhülse 20 angeordnet, die sich aus der Vorspanneinrichtung 24 heraus erstreckt. Der Befestigungsring 42 dient zur Befestigung eines ferromagnetischen Haftelements 44 an der Druckhülse 20. Das Haftelement 44 ist vorliegend ringförmig ausgebildet und umgreift die Ventilstange 12 radial. Es ist stirnseitig an der Druckhülse 20 angeordnet. Das Haftelement 44 greift zumindest teilweise in die sich in Axialrichtung erstreckende Führungsnut 48 ein, die an einer Umfangseite der Ventilstange 12 angeordnet ist. Auf diese Weise kann die Druckhülse 20 den Magneten 46 bei einer Axialbewegung aufgrund des Verschleißes der Packung 16 immer mitnehmen.

Der Magnet 46 ist gegenüber der Ventilstange 12 und dem Haftelement 44 rotierbar angeordnet. D.h. bei einer Umdrehung des Stellkörpers 26 rotiert der Magnet 46 auf dem Haftelement 44 gleitend um die Ventilstange 12. Über den mit dem Stelldeckel 28 fest verbundenen Führungskörper 50 verbleibt der Magnet 46 trotz des Verdrehens der Vorspanneinrichtung 24 relativ zum Ventilgehäuse 14 in einem gleichbleibenden radialen Abstand relativ zur Sensoreinheit 54.

Vorliegend ist der Führungskörper 50 mit dem Stelldeckel 28 der Vorspanneinrichtung 24 fest verbunden, wobei die Vorspanneinrichtung 24 und die Messeinrichtung 52 als eine vormontierbare Baueinheit ausgebildet sind. Die Messeinrichtung 52 ist über einen Kabelanschluss 58 mit Strom versorgt, der ebenfalls zur Übertragung von Daten mit weiteren Bauteilen der Stellventileinheit 10, beispielsweise einem vorliegend nicht dargestellten Ventilstellungsregler, dienen kann. Die den Führungskörper 50, die Sensoreinheit 54, den Magneten 46 sowie den Kabelanschluss 58 umfassende Messeinrichtung 52 ist lagefest mit dem Stelldeckel 28 verbunden und rotiert beim Verdrehen des Stellkörpers 26 als eine Einheit um die Ventilstange 12.

Es ist auch denkbar, dass der Führungskörper 50 der Messeinrichtung 52 lösbar mit der Vorspanneinrichtung 24 verbunden ist, beispielsweise verschraubt oder verklipst.

Fig. 4 stellt eine Draufsicht auf die Messeinrichtung 52 nach Fig. 3 von oben dar. Gut zu erkennen ist, dass der Führungskörper 50 mit einer die Führungsnut 48 ausbildenden Längsseite an der Ventilstange 12 angeordnet ist. Die Führungsnut 48 umschließt den Magneten 46 herausfallsicher über einen Äquator des Magneten 46 hinaus. Die durch Materialentnahme des Führungskörpers 50 gebildete Begrenzung der Führungsnut 48 bildet vorliegend zumindest teilweise einen Lochkreis und weist eine komplementäre Form zum vorliegend zylindrischen Magneten 46 auf. So ist der Magnet 46 nahezu spielfrei axial beweglich in der Führungsnut 48 angeordnet. Die Führungsnut 48 ist im Bereich der Berührung mit dem Magneten 46 in vorteilhafterweise aus einem Material ausgebildet, das gute Gleiteigenschaften aufweist, z.B. POM. Alternativ ist die Führungsnut 48 mit einem solchen Material beschichtet. Der Magnet 46 ist üblicherweise aus NdFeB und außen mit Ni-Cu-Ni beschichtet. Ein Kombination der jeweiligen Materialien ergibt eine gute, spielfreie Gleitführung.

Das Haftelement 44, das insbesondere ringförmig ausgebildet ist, dringt im Bereich der Materialentnahme des Führungskörpers 50 teilweise radial in die Führungsnut 48 ein. In Axialrichtung betrachtet überschneiden sich das Haftelement 44 und der Führungskörper 50 teilweise im Bereich der Materialentnahme. Dadurch kann die Druckhülse 20 bei einer axialen Lageveränderung den insbesondere stirnseitig an ihr angeordneten Magneten 46 in der Führungsnut 48 mitnehmen.

Ferner ist gut zu erkennen, dass der Magnet 46 gegenüber dem Haftelement 44 rotierbar angeordnet ist, so dass er bei einer Umdrehung des Stellkörpers 26 um die Ventilstange 12 auch rotiert, wobei er auf dem Haftelement 44 haftet. So verbleibt der Magnet 46 trotz des Verdrehens der Vorspanneinrichtung 24 relativ zum Ventilgehäuse 14 in radial gleichbleibendem Abstand relativ zur Sensoreinheit 54, wodurch diese immer zuverlässig eine axiale Wegmessung oder Position des Magneten 46 erfassen kann.

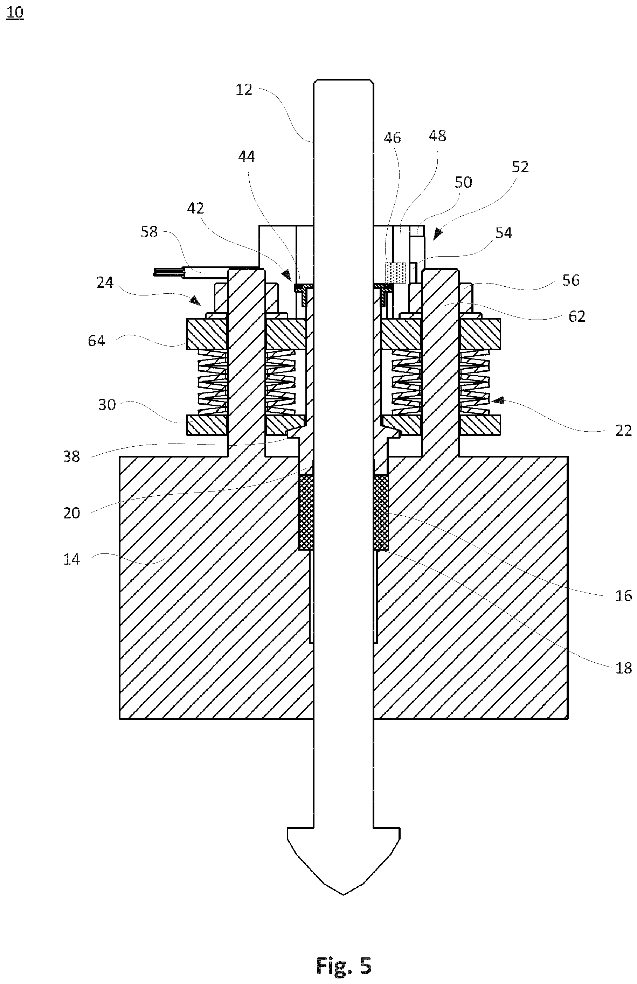

In Fig. 5 ist ein Ausschnitt einer zweiten Ausführungsform einer erfindungsgemäßen Stellventileinheit 10 gezeigt. Die Stellventileinheit 10 verfügt über einen Ventilkörper 14, durch den eine Ventilstange 12 hindurchgeht. Die Ventilstange 12 ist mit Hilfe einer Dichtanordnung, die eine Packung 16 aufweist, gegenüber dem Ventilkörper 14 abgedichtet. Um die Packung 16 zu komprimieren, ist eine federbelastete Druckhülse 20 vorgesehen, die von einem Druckelement 30 beaufschlagt wird. Das Druckelement 30 arbeitet mit einem Federelement 22 zusammen, das sich einerseits an einem Vorspannelement 64 einer Vorspanneinrichtung 24 und andererseits am Druckelement 30 abstützt. Das Federelement 22 sowie das Druckelement 30 sind von einem im Ventilkörper 14 verankerten Anschlusselement 62 durchsetzt, das vorliegend als Gewindebolzen ausgeführt ist. Die Vorspannkraft des Federelements 22, und somit eine Druckbeaufschlagung auf die Druckhülse 20 und die Packung 16, ist über die Vorspanneinrichtung 24 bzw. über eine mit dem Anschlusselement 62 verschraubte Schraubenmutter 56 veränderbar.

Zur exakten Einstellung der gewünschten Federspannung auf die Packung 16 kann die Vorspanneinrichtung 24 zusammen mit einer Sensoreinheit 54 genutzt werden. Das Federelement 22 und die Vorspanneinrichtung 24 werden in der Stellventileinheit 10 derart montiert, dass kein Druck auf die Druckhülse 20 wirkt. An dieser Stelle kann ein magnetsensitiver Sensor der Sensoreinheit 54 beispielsweise genullt werden.

Dann wird das Federelement 22 auf die gewünschte Vorspannkraft komprimiert. Hierfür wird die Schraubenmutter 56 aus der Null-Position gedreht, beispielweise mit einem Drehmomentschlüssel oder einem Aktor. Beim Verdrehen wird das Federelement 22 zwischen dem Vorspannelement 64 und dem Druckelement 30 komprimiert, wobei die axiale Lageveränderung des Federelements 22 einer Veränderung der Vorspannkraft des Federelements 22 entspricht. Über das Druckelement 30, das sich an einem Vorsprung 38 der Druckhülse 20 abstützt, drückt das Federelement 22 auf die Druckhülse 20, um die Packung 16 axial zu verpressen. Das Federelement 22 kann über die Schraubenmutter 56 der Vorspanneinrichtung 24 bis zu einem vordefinierten Sensorwert, d.h. einer spezifischen Anpresskraft der Druckhülse 20 bzw. der Packung 16, vorgespannt werden. Dabei kann während des Montage-Nachziehvorgangs eine auf die Packung 16 wirkende Anpresskraft über eine Anzeigeeinheit einer Bedieneinheit angezeigt und die Schraubenmutter 56 dementsprechend angezogen werden.

Beim Anziehen der Schraubenmutter 56 erhöht sich die Vorspannkraft und das Federelement 22 wird komprimiert. Die Druckhülse 20 bewegt sich dabei nach oben aus dem Vorspannelement 64 heraus. Über einen Befestigungsring 42 ist ein umlaufendes Haftelement 44 aus magnetisch leitendem Material stirnseitig mit einem freien Ende der Druckhülse 20 verbunden. Am Haftelement 44 haftet ein Magnet 46, der in einem Führungskörper 50 am Vorspannelement 64 der Vorspanneinrichtung 24 axial beweglich in einer Führungsnut 48 gelagert ist. Das Haftelement 44 dringt radial zumindest teilweise in die Führungsnut 48 ein, so dass der Magnet 46 durch eine axiale Verschiebung der Druckhülse 20 immer mitgenommen wird. Die axiale Bewegung des Magneten 46 entspricht der axialen Lageveränderung der Druckhülse 20 relativ zum Vorspannelement 64. Die ebenfalls im Führungskörper 50 angeordnete Sensoreinheit 54 arbeitet mit dem Magneten 46 berührungslos zusammen, und kann die axiale Lagerveränderung der Druckhülse 20 erfassen.

Über die axiale Verschiebung der Druckhülse 20 und die Kraft-Wegkennlinie des Federelements 22 kann die Vorspannkraft auf die Packung 16 und die axiale Veränderung der Kraft auf die Packung 16 abgeleitet werden. So kann im laufenden Betrieb jederzeit ein Positionssensorwert und die verbleibende Vorspannkraft angezeigt und abgelesen werden. Erreicht der Sensorwert bzw. die Anpresskraft eine vordefinierte Schwelle, wird beispielsweise ein Alarm ausgegeben, damit die Packung 16 entweder nachgespannt oder verschleißbedingt ersetzt werden kann.

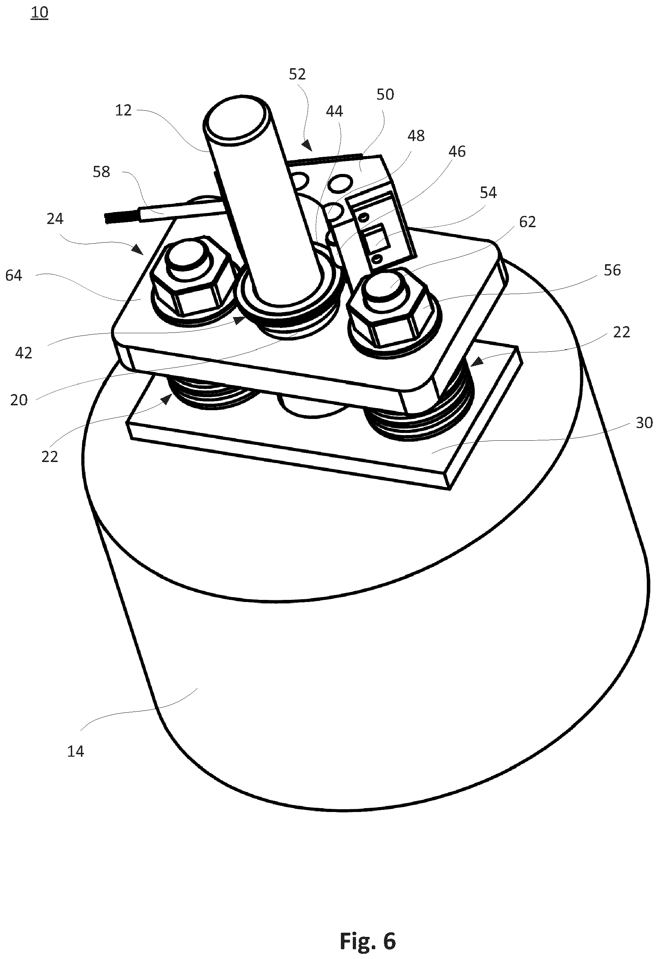

In Fig. 6 ist eine perspektivische Draufsicht der zweiten Ausführungsform einer erfindungsgemäßen Stellventileinheit 10 nach Fig. 5 gezeigt. Die Stellventileinheit 10 weist eine mittels einer Dichtanordnung gegenüber einem Ventilkörper 14 abgedichteten Ventilstange 12 auf. Eine vorliegend nicht dargestellte Packung 16 ist vorgesehen, auf die eine federbelastete Druckhülse 20 wirkt. Die Druckhülse 20 wird von einem vorliegend als Komprimierungsflansch ausgebildeten Druckelement 30 beaufschlagt, das mit einem Federelement 22 zusammenarbeitet, welches sich an einem Vorspannelement 64 einer Vorspanneinrichtung 24 abstützt. Das Vorspannelement 64, das Federelement 22 sowie das Druckelement 30 sind von einem im Ventilkörper 14 verankerten Anschlusselement 62 durchsetzt, das vorliegend als Gewindebolzen ausgeführt ist. Mit Hilfe einer mit dem Anschlusselement 62 verschraubten Schraubenmutter 56 kann die Spannkraft des Federelements 22 und somit eine Druckbeaufschlagung auf die Druckhülse 20 und die Packung 16 variiert werden.

Die Vorspanneinrichtung 24 ist mit einem Führungskörper 50 verbunden, der eine axiale Führungsnut 48 ausbildet, in welcher ein Magnet 46 axial beweglich gelagert ist.

Im Führungskörper 50 ist eine Sensoreinheit 54 angeordnet, die einen Magnetsensor aufweist. Der Sensor und der Magnet 46 sind im Führungskörper 50 räumlich getrennt voneinander untergebracht. Durch die axiale Führung des Magneten 46 in der Führungsnut 48 verbleibt der Magnet 46 immer in einem festen radialen Abstand relativ zur lagefest montierten Sensoreinheit 54.

Vorliegend haftet der Magnet 46 an einem magnetisch leitenden Haftelement 44, das mittels eines arretierbaren Befestigungsringes 42 stirnseitig mit einem freien Ende der Druckhülse 20 verbunden ist. Das ringförmige Haftelement 44 umgreift die Ventilstange 12 radial. Das Haftelement 44 dringt radial zumindest teilweise in die Führungsnut 48 des Führungskörpers 50 ein. Dadurch kann die Druckhülse 20 den insbesondere stirnseitig mit ihr verbundenen Magneten 46 in Axialrichtung in der Führungsnut 48 mitnehmen, wenn sie sich aufgrund des Verschleißes der Packung 16 axial bewegt.

### Bezugszeichenliste

- 10: Stellventileinheit
- 12: Ventilstange
- 14: Ventilgehäuse
- 16: Packung
- 18: Gegenlager
- 20: Druckhülse
- 22: Federelement
- 24: Vorspanneinrichtung
- 26: Stellkörper
- 28: Stelldeckel
- 30: Druckelement
- 32: zweiter Anschlag
- 34: Stellgewinde
- 36: Außengewinde
- 38: Vorsprung
- 40: erster Anschlag
- 42: Befestigungsring
- 44: Haftelement
- 46: Magnet
- 48: Führungsnut
- 50: Führungskörper
- 52: Messeinrichtung
- 54: Sensoreinheit
- 56: Schraubenmutter
- 58: Kabelanschluss
- 60: Schraubverbindung
- 62: Anschlusselement
- 64: Vorspannelement

## Patentansprüche

1. Stellventileinheit (10) mit einer Messeinrichtung (52), wobei die Stellventileinheit (10) eine Ventilstange (12) umfasst, die über eine Dichtanordnung gegenüber einem Ventilgehäuse (14) abgedichtet ist, wobei die Dichtanordnung eine Packung (16) aufweist, die axial zwischen einer Druckhülse (20) und einem Gegenlager (18) am Ventilgehäuse (14) aufgenommen ist, wobei die Druckhülse (20) relativ zum Ventilgehäuse (14) axial beweglich gelagert ist und eine von wenigstens einem Federelement (22) auf die Druckhülse (20) aufgebrachte Anpresskraft auf die Packung (16) überträgt, wobei das Federelement (22) sich an einer Vorspanneinrichtung (24) abstützt, welche im Abstand zum Gegenlager (18) einstellbar ist, wodurch die auf die Druckhülse (20) wirkende Anpresskraft des Federelements (22) einstellbar ist, und wobei die Messeinrichtung (52) eine Lageveränderung der Druckhülse (20) relativ zum Gegenlager (18) ermittelt, wobei die Messeinrichtung (52) zur Überwachung der Anpresskraft auf die Packung (16) eine Sensoreinheit (54) aufweist, die mit der Vorspanneinrichtung (24) verbunden ist, wobei die Druckhülse (20) gegenüber der Vorspanneinrichtung (24) axial beweglich ist, **dadurch gekennzeichnet, dass** die Sensoreinheit (54) mit einem Magneten (46) zusammenwirkt, der mit der Druckhülse (20) verbunden ist, wobei der Magnet (46) axial führbar gelagert an der Vorspanneinrichtung (24) angeordnet ist, und wobei die Messeinrichtung (52) einen mit der Vorspanneinrichtung (24) verbundenen Führungskörper (50) aufweist, der eine axiale Führungsnut (48) ausbildet, in welcher der Magnet (46) herausfallsicher angeordnet ist.

2. Stellventileinheit nach Anspruch 1, **dadurch gekennzeichnet, dass** die Sensoreinheit (54) am Führungskörper (50) angeordnet ist.

3. Stellventileinheit nach einem der vorangehenden Ansprüche, **dadurch gekennzeichnet, dass** der Magnet (46) in Umfangsrichtung der Ventilstange (12) drehbar angeordnet ist.

4. Stellventileinheit nach einem der vorangehenden Ansprüche, **dadurch gekennzeichnet, dass** der Magnet (46) über ein magnetisch leitendes Haftelement (44) mit der Druckhülse (20) verbunden ist.

5. Stellventileinheit nach Anspruch 4, **dadurch gekennzeichnet, dass** das Haftelement (44) über einen Befestigungsring (42) mit der Druckhülse (20) verbunden ist.

6. Stellventileinheit nach Anspruch 4 oder 5, **dadurch gekennzeichnet, dass** das Haftelement (44) die Ventilstange (12) radial umgreift.

7. Stellventileinheit nach einem der Ansprüche 4 bis 6, **dadurch gekennzeichnet, dass** das Haftelement (44) zumindest teilweise radial in die Führungsnut (48) des Führungskörpers (50) eindringt und den Magneten (46) in Axialrichtung mitnimmt.

8. Stellventileinheit nach einem der vorangehenden Ansprüche, **dadurch gekennzeichnet, dass** die Sensoreinheit (54) mit einer Kontrolleinheit kommunizierend verbunden ist, die über eine Kraft-Wegkennlinie der Federelement (22) die Anpresskraft auf die Packung (16) ermittelt.

9. Stellventileinheit nach Anspruch 8, **dadurch gekennzeichnet, dass** die Kontrolleinheit mit einer Bedieneinheit kommunizierend verbunden ist, wobei die Bedieneinheit wenigstens eine Anzeigeeinheit sowie eine Kalibrierungstaste aufweist.

10. Stellventileinheit nach einem der Ansprüche 8 oder 9, **dadurch gekennzeichnet, dass** die Kontrolleinheit zur Einstellung der Anpresskraft mit wenigstens einem Aktor verbunden ist, der mit der Vorspanneinrichtung (24) verbunden ist.

## Claims

1. Control valve unit (10) with a measuring device (52), the control valve unit (10) comprising a valve rod (12) which is sealed off from a valve housing (14) via a sealing arrangement, the sealing arrangement having a packing (16) which is received axially between a pressure sleeve (20) and a counter-bearing (18) on the valve housing (14), which pressure sleeve (20) is axially mounted so as to be movable relative to the valve housing (14) and transmits a contact pressure applied to the pressure sleeve (20) by at least one spring element (22) to the packing (16), with the spring element (22) being supported on a pretensioning device (24) which is adjustable in terms of distance from the counter bearing (18), thus allowing an adjustment of the contact pressure of the spring element (22) acting on the pressure sleeve (20), and wherein the measuring device (52) senses a change in position of the pressure sleeve (20) relative to the counter-bearing (18), wherein the measuring device (52) has a sensor unit (54) for monitoring the contact pressure on the packing (16), which unit is connected to the pretensioning device (24), wherein the pressure sleeve (20) is axially movable relative to the pretensioning device (24), **characterized in that** the sensor unit (54) interacts with a magnet (46) which is connected to the pressure sleeve (20), the magnet (46) being arranged on the pretensioning device (24) in an axially guidable manner, and the measuring device (52) having a guide body (50) which is connected to the pretensioning device (24) and forms an axial guide groove (48) in which the magnet (46) is arranged in a manner to prevent it from falling out.

2. Control valve unit according to claim 1, **characterized in that** the sensor unit (54) is arranged on the guide body (50).

3. Control valve unit according to any one of the preceding claims, **characterized in that** the magnet (46) is arranged to be rotatable in the circumferential direction of the valve rod (12).

4. Control valve unit according to any one of the preceding claims, **characterized in that** the magnet (46) is connected to the pressure sleeve (20) via a magnetically conductive adhesive member (44).

5. Control valve unit according to claim 4, **characterized in that** the adhesive member (44) is connected to the pressure sleeve (20) via a fastening ring (42).

6. Control valve unit according to any one of claims 4 or 5 above, **characterized in that** the adhesive member (44) engages radially around the valve rod (12).

7. Control valve unit according to any one of claims 4 to 6 above, **characterized in that** the adhesive member (44) penetrates at least partially radially into the guide groove (48) of the guide body (50), thereby entraining the magnet (46) in the axial direction.

8. Control valve unit according to any one of the preceding claims, **characterized in that** the sensor unit (54) is connected to a control unit for communication which latter determines the contact pressure on the packing (16) via a force-displacement characteristic of the spring element (22).

9. Control valve unit according to claim 8, **characterized in that** the control unit is connected to an operating unit for communication, which operating unit has at least one display unit and a calibration button.

10. Control valve unit according to any one of claims 8 or 9 above, **characterized in that** the control unit for adjusting the contact pressure is connected to at least one actuator that is in turn connected to the pretensioning device (24).

## Revendications

1. Unité de soupape de réglage (10) avec un dispositif de mesure (52), l'unité de soupape de réglage (10) comprenant une tige de soupape (12) qui est rendue étanche par rapport à un boîtier de soupape (14) par l'intermédiaire d'un dispositif d'étanchéité, le dispositif d'étanchéité présentant une garniture (16), qui est logé axialement entre une douille de pression (20) et un contre-appui (18) sur le boîtier de soupape (14), la douille de pression (20) étant logée de manière mobile axialement par rapport au boîtier de soupape (14) et transmettant à la garniture (16) une force de pression appliquée par au moins un élément de ressort (22) sur la douille de pression (20), l'élément de ressort (22) s'appuyant sur un dispositif de précontrainte (24) dont la distance par rapport au contre-appui (18) est réglable, ce qui permet de régler la force de pression de l'élément de ressort (22) agissant sur la douille de pression (20), et le dispositif de mesure (52) déterminant un changement de position de la douille de pression (20) par rapport au contre-appui (18), le dispositif de mesure (52) présentant, pour surveiller la force de pression sur la garniture (16), une unité de capteur (54) qui est reliée au dispositif de précontrainte (24), la douille de pression (20) étant mobile axialement par rapport au dispositif de précontrainte (24), **caractérisée en ce que** l'unité de capteur (54) coopère avec un aimant (46) qui est relié à la douille de pression (20), l'aimant (46) étant disposé sur le dispositif de précontrainte (24) de manière à pouvoir être guidé axialement, et le dispositif de mesure (52) présentant un corps de guidage (50) relié au dispositif de précontrainte (24), qui forme une rainure de guidage axiale (48) dans laquelle l'aimant (46) est disposé de manière à ne pas tomber.

2. Unité de soupape de réglage selon la revendication 1, **caractérisée en ce que** l'unité de capteur (54) est disposée sur le corps de guidage (50).

3. Unité de soupape de réglage selon l'une des revendications précédentes, **caractérisée en ce que** l'aimant (46) est disposé de manière à pouvoir tourner dans la direction circonférentielle de la tige de soupape (12).

4. Unité de soupape de réglage selon l'une des revendications précédentes, **caractérisée en ce que** l'aimant (46) est relié à la douille de pression (20) par un élément de fixation (44) magnétiquement conducteur.

5. Unité de soupape de réglage selon la revendication 4, **caractérisée en ce que** l'élément de fixation (44) est relié à la douille de pression (20) par une bague de fixation (42).

6. Unité de soupape de réglage selon la revendication 4 ou 5, **caractérisée en ce que** l'élément de fixation (44) entoure radialement la tige de soupape (12).

7. Unité de soupape de réglage selon l'une des revendications 4 à 6, **caractérisée en ce que** l'élément de fixation (44) pénètre au moins partiellement radialement dans la rainure de guidage (48) du corps de guidage (50) et entraîne l'aimant (46) dans la direction axiale.

8. Unité de soupape de réglage selon l'une des revendications précédentes, **caractérisée en ce que** l'unité de capteur (54) est reliée de manière communicante à une unité de contrôle qui détermine la force de pression sur la garniture (16) par l'intermédiaire d'une caractéristique force/course de l'élément de ressort (22).

9. Unité de soupape de réglage selon la revendication 8, **caractérisée en ce que** l'unité de contrôle est reliée de manière communicante à une unité de commande, l'unité de commande présentant au moins une unité d'affichage ainsi qu'une touche de calibrage.

10. Unité de soupape de réglage selon l'une des revendications 8 ou 9, **caractérisée en ce que** l'unité de contrôle pour le réglage de la force de pression est reliée à au moins un actionneur qui est relié au dispositif de précontrainte (24).
